# EUROPEAN PATENT APPLICATION

(11) **EP 1 699 252 A1**
(43) Date of publication of application: **06.09.2006**
(21) Application number: 05101554.3
(22) Date of filing: 01.03.2005
(51) Int. Cl.: H04Q 7/38

(54) **Method and system to pay for a content downloaded to a mobile terminal**

(71) Applicant: Sony Ericsson Mobile Communications AB, 221 88 Lund (SE)
(72) Inventor: Andersson, Stefan, 230 14, Klagerup (SE); Andersson, Jonas, 254 38, Helsingborg (SE)
(74) Representative: Akerman, Marten Lennart

(57) **Abstract**

The invention relates to a payment method for content, e.g. a content item protected by a Digital Rights Management (DRM) scheme. The content item contains a payment directive that automatically invokes a payment procedure before the content item may be used. The payment directive specifies how to utilise payment methods in the wireless network in order to grant access to the content downloaded in the device. The content item may be downloaded first but is not enabled until a payment has been initiated. The invention also relates to mobile equipment implementing the method and the corresponding content item.

## Description

### Field of the invention

The present invention relates to a payment method for content, e.g. a content item protected by a Digital Rights Management (DRM) scheme. The content item contains a payment directive that automatically invokes a payment procedure before the content item may be used.

The invention also relates to mobile equipment implementing the method and the corresponding content item.

### State of the art

Content items are today downloaded to mobile equipment, such as mobile telephones. The content item may contain games, music and video etc. The content items are put on the market by content providers that of course need a billing system to get paid. Various methods are employed involving e.g. a telecommunication system for billing a subscriber. In the wireless world there are several reliable payment solutions, such as the pre-paid system in which the subscriber has deposited an amount in advance. Also, payments may be made on-line by means of credit cards or towards a subscriber's on-line account over the Internet. In a post-paid system, the subscriber receives a bill for services rendered. All major content distribution schemes involving a computer (PC) internet component utilise credit card style payments. Payments are invoked as telecommunication services are used.

In any case, the payment procedure is finalised before the content item is downloaded. This means that the user and content provider must establish a payment relation which in practise requires a sign-up procedure, where the user for instance registers his credit card number.

The content item may also include restrictions for use, e.g. the content item has consumable constraints and may only be used once or a specific number of times. When a restriction limit has been reached, the user must download the content item again or at least manually finalise a new enabling procedure for the content item.

One problem with the old methods is that the user is reluctant to initiate the payment procedure even before the content item is downloaded. Also, many users are reluctant to use their credit card numbers over the Internet. Thus, the old methods will discourage users both from a usability perspective as well as from a security perspective. Also, the content providers have to protect unauthorised access to content items, since the content items have no built-in protection against installing the content item, if a user should succeed in downloading a content item without paying.

### Summary of the invention

The present invention solves this problem by letting the content provider specify directives to the mobile device on how to utilise payment methods in the wireless network in order to grant access to the content downloaded in the device. The payment directives are included in or associated with the downloaded content. The content item may be downloaded first but is not enabled until a payment has been initiated.

In a first aspect, the invention provides a method for payment of content, comprising the steps of:
incorporating or associating a payment directive in/with a content item; downloading the payment directive into a mobile equipment;
when utilising the content item in the mobile equipment, reading the payment directive;
performing the payment directive involving a payment procedure including a payment from an account associated with the mobile equipment.

Preferably, the payment procedure involves a contact over a mobile telecommunication network.

The contact may involve messages, such as SMS and MMS, or circuit-switched calls, packet switched sessions, SS/USSD (Switched Session/Unstructured Supplementary Service Data) based procedures, or SIM based payment.

Suitably, the acknowledgement of the payment is sent by means of a message (SMS).

The payment directive may specify a dedicated message data which the telecommunication network will use when charging for the message services, such as SMS-C addresses, destination addresses, IP addresses, Access Point addresses.

In one embodiment, the content item is temporarily enabled if the mobile equipment is out of radio coverage.

Suitably, the payment directive is performed as soon as mobile equipment enters into radio coverage.

In a further embodiment, a cash card is inserted in the mobile equipment, the cash card containing a pre-paid amount, and the payment procedure involves deduction of a monetary amount from the cash card.

Preferably, the payment directive only is performed after a confirmation by a user.

In one embodiment, the payment directive comprises a restriction limit for use of the content item and a renewal directive, and when the restriction limit is reached, a further payment procedure is performed in accordance with the renewal directive, whereupon the content item is re-enabled.

The payment directive may comprise a free preview, such that the content item is permitted to be utilised once without invoking any payment procedure.

In a preferred embodiment, the payment procedure further includes; receiving an acknowledgement of the payment; and
only after receipt of said acknowledgement, enabling the content item

In a second aspect, the invention provides mobile equipment adapted to implement a method for payment of content as mentioned above.

In a third aspect, the invention provides a content item for downloading to mobile equipment.

According to the invention, the content item incorporates a payment directive involving a payment procedure including a payment from an account associated with the mobile equipment.

Preferably, the payment directive includes a specification of a contact over a mobile telecommunication network.

The contact may involve messages, such as SMS and MMS, or circuit-switched calls, packet switched sessions, SS/USSD (Switched Session/Unstructured Supplementary Service Data) based procedures, or SIM based payment.

The payment directive may specify a dedicated message data which the telecommunication network will use when charging for the message services, such as SMS-C addresses, destination addresses, IP addresses, Access Point addresses.

In one embodiment, the content item is adapted to be temporarily enabled if the mobile equipment is out of radio coverage.

Suitably, the content item is adapted to command the payment directive to be performed as soon as mobile equipment enters into radio coverage.

In a further embodiment, the content item is adapted to command deduction of a monetary amount from a cash card inserted in the mobile equipment.

Preferably, the content item is adapted to command the payment directive to be performed only after a confirmation by a user.

In one embodiment, the payment directive comprises a restriction limit, restricting use of the content item, and a renewal directive, and the content item is adapted to command a further payment procedure in accordance with the renewal directive when the restriction limit is reached, whereupon the content item is re-enabled.

The payment directive may comprise a free preview, such that the content item is permitted to be utilised once without invoking any payment procedure.

In a preferred embodiment, the content item is adapted to be enabled after receiving an acknowledgement of the payment.

Suitably, the payment directive is contained in a rights object container.

### Brief description of the drawings

The invention will be described in detail below with reference to the accompanying drawings, in which:
fig. 1 is a schematic view of entities involved in the method according to the invention; and
fig. 2 is a diagram of the signalling using SMS in one embodiment of the invention.

### Detailed description of preferred embodiments

The invention will be described in the context of downloading content items to a mobile terminal, such as mobile telephones, pagers, communicators, electric organisers, smart phones and the like, in this specification referred to as mobile equipment. Generally, content items are protected by a digital rights management, DRM, scheme. As is known, DRM is a system for protecting e.g. the copyrights of digital content that is distributed online. A DRM system provides a container format that may include album and track titles and a set of rules for enforcing copyright compliance that software and hardware players must support in order to play back material. By means of DRM, content items may also be configured to expire after they have been run a number of times, on a particular date, or when the subscription has expired etc. However, the payments as such are controlled separately from DRM. Various payment methods are known as is outlined in the introduction.

According to the present invention, payments are invoked based on information contained in or associated with a content item.

In a preferred embodiment of the present invention, payments are invoked from within the DRM system. The content provider incorporates a payment directive in the content item, suitably in the rights object, RO, container used in DRM. The content item may be downloaded freely but when the user utilises the content for the first time, the DRM motor of the mobile equipment detects the payment directive. Immediately a payment procedure is initiated using a defined telecommunications bearer. Suitably, the user is asked to confirm that the payment should be made, before the payment procedure proceeds.

When the actual payment has been made, whether pre-paid or post-paid or by means of any other method, an acknowledgement is sent to the mobile equipment. First after receipt of the acknowledgement the content item is enabled.

In an alternative embodiment, the content item is enabled as soon as the payment procedure is initiated, that is even without receipt of an acknowledgement. In this case, it is assumed that the payment procedure is sufficiently reliable and no acknowledgement is needed.

As is conventional, the content item may also include restrictions for use. However, with the present invention renewal directives may be incorporated in or associated with the content item. Then, the payment directives contain a definition of a payment method to use when access to the content becomes due and needs renewal. Also, the restrictions for use, that is various consumable constraints, such as content counters, time intervals, subscription periods etc, are defined.

When the restriction limit has been reached, a new payment procedure is invoked automatically. This procedure is similar to the original payment procedure, but may involve different parameters, e.g. prices. For example, the first number of uses may be more expensive than the next number of uses. Also the first payment could permit a smaller number of uses, but the subsequent payment could allow a greater number of uses, thus giving a frequent user a discount.

The payment directive can define if the content item shall be granted a free preview. In this case the content item is permitted to be used once without invoking any payment procedure. Thereafter the restriction limit has been reached, and the payment procedure is invoked automatically.

A payment directive may reside in the content item as discussed above or be contained in a separate file. The separate file may be downloaded together with, before or after the content item. Before the content item is utilised, the separate file is associated and coupled to the content item, so that the payment directive is detected and the correct payment procedure is performed.

Some examples of mobile payment directives are given below.

A directive may define what mobile service will be the bearer of the payment of the content item, e.g. message services like SMS and MMS, circuit switched calls, packet switched sessions, SS/USSD (Switched Session/Unstructured Supplementary Service Data) based procedures, SIM based payment solutions e.g using the SIM (Subscriber Identity Module) Application Toolkit, or cash cards etc. In case of messages, the payment directive defines to what number a message should be sent. For example, the payment directive may specify dedicated message data which the telecommunication network uses when charging for the message services, such as SMS-C addresses, destination addresses, IP addresses, Access Point addresses. This results in that the subscriber is charged a defined amount in accordance with known procedures. Suitably, a message is sent back to the mobile equipment as acknowledgement of the payment and this acknowledgement enables the content item.

In case of a circuit switched call, the payment directive defines what telephone number should be called. This would be a pay number involving charging of the subscriber from whose mobile equipment the call is made, in accordance with known procedures. When the mobile equipment and the DRM motor therein detects that the defined pay-call has been established, this is taken as an acknowledgement of the payment. In an alternative, the circuit switched call could result in that a message is sent to the mobile equipment in the same way as discussed above.

In case of a SIM based payment solution, the DRM motor may control or command the SIM Application Toolkit to prepare and send a message or establish a circuit switched call etc.

In case of a cash card based solution, the DRM motor does not have to establish a connection over the telecommunication network. In stead, the cash card inserted in the mobile terminal contains a pre-paid amount. When the payment procedure is performed, the correct monetary amount is deducted from the cash card in accordance with the payment directive.

Sometimes the mobile network is inaccessible, e.g. when the mobile equipment is out of radio coverage. In this case, the payment directive can define if the content item shall be granted or not when it is utilised, i.e. even when the payment procedure cannot be performed. If granted, the content can be used temporarily. During this time the payment directive is awaiting to be performed and the message or call is put on hold. When the mobile equipment re-enters radio coverage the payment procedure is invoked and the message is sent or the call is established, as the case may be. If the payment directive requires an acknowledgement, and payment is not acknowledged, the content item is disabled. If payment is acknowledged, the content item continues to be enabled.

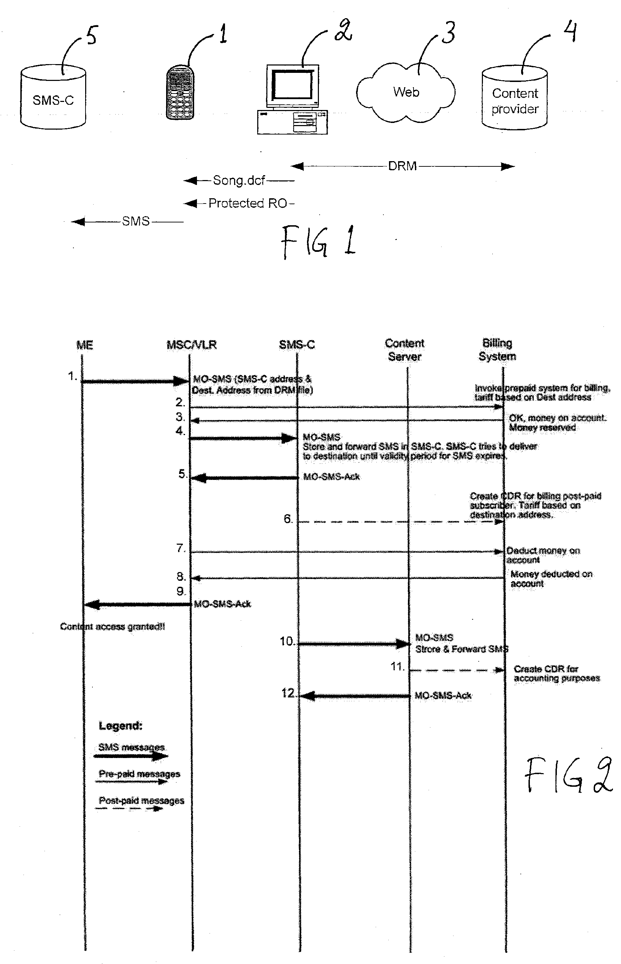

Fig. 1 illustrates the entities that may be involved in the present invention. Mobile equipment, e.g. a mobile telephone 1, includes means for receiving a content item protected by DRM. The content item may for instance be a piece of music received as a file Song.dcf, that is a file in the DRM encrypted content format together with a protected rights object RO. The mobile equipment 1 contains a DRM motor extracting information in the rights object RO/RO container incorporated in the content item.

A typical user has a computer for communicating over the Internet or web 3 with a content provider 4. The mobile equipment 1 may also communicate directly over the web 3 with the content provider 4.

The mobile telecommunication network is symbolised by a Short Message Service Centre SMS-C 5. SMS-C 5 may belong to the subscriber's normal mobile operator, or may be a dedicated message server belonging to the content provider. In any case, the payment directive in the RO container defines what service centre is to be used. The number of the SMS-C is stated in the field "via-sc". A dedicated message server is considered more secure and robust.

An example with Short Message Service is discussed below.

The user finds a content item which he wants to use, e.g. by searching on the web 3 by means of his computer 2. The content is downloaded to the computer and then transferred to the mobile equipment 1. It is also possible to download the content item directly from the content provider 4 to the mobile equipment 1, e.g. with WAP, Wireless Application Protocol or with a message.

Now the content item is downloaded, but not yet installed. The content item contains a rights object, RO. In order to actually run and use the content item the rights object RO has to be installed in the mobile equipment, especially in case of a Java application. Each time a rights object is installed the following is done:
1. The DRM motor of the mobile equipment 1 scans the RO for the payment directive, e.g. a payment tag.
2. If it finds the payment tag, it sends an SMS to the number smsto of the mobile operator's billing system using the dedicated message server SMS-C as SMS switching centre as defined by via-sc. The SMS also defines the amount to be charged the subscriber or the amount is associated with the number smsto. The mobile equipment is associated with the SMS since the mobile equipment originates the SMS. Before the message is sent, the user may receive a warning on the display, such as: "This service will cost 2 euros. Proceed?" The user may interrupt the procedure by not confirming.
3. When the mobile equipment 1 gets an acknowledgment from the switching centre SMS-C 5 it registers the rights object in the rights object data base on the mobile equipment. Then the content item is enabled.

A rights object that has expired due to consumable constraints can be renewed automatically using the following procedure, that does not involve downloading a new rights object:
1. The mobile equipment scans the rights object for the renewal payment directive/renewal tag.
2. If it finds the renewal tag, it sends an SMS to the number of the mobile operator's billing system using the dedicated message server SMS-C as SMS switching centre. The SMS also defines the amount to be charged as discussed above.
3. When the mobile equipment 1 gets an acknowledgment from the switching centre SMS-C 5 it re-registers the rights object in the rights object data base on the equipment. Then the content item is re-enabled.

Note that renewal directives are only applicable for ROs carrying consumable constraints such as count, interval etc.

Fig. 2 is a diagram of existing infrastructure that can be used for implementing the present invention. The procedure starts at the top after the user has tried to utilise a content item. The broad arrows represent SMS messages, and the narrow arrows represent other signalling within the telecommunication network, solid arrows for pre-paid payments and broken arrows for post-paid payments, respectively.
1. The mobile equipment originates an SMS, MO-SMS, using the SMS-C address as defined by via-sc and destination address smsto from the DRM file and sends it to the Mobile Switching Centre/Visitor Location Register MSC/VLR.
2. (For pre-paid). If the subscriber has a pre-paid subscription, the message is forwarded to the billing system. The billing system charges the subscriber in accordance with a tariff based on the destination address smsto. The destination may be used to charge the SMS correctly. For example, smsto = 1122 could mean "charge 1 euro" and smsto = 1133 could mean "charge 1.50 euro".
3. (For pre-paid). If there is money on the account, a message is sent back to the MSC/VLR.
4. The MO-SMS is forwarded to the dedicated SMS Centre, SMS-C. SMS-C stores and forwards the SMS and tries to deliver the SMS to the destination until the validity period of the SMS expires.
5. If MO-SMS is delivered, an acknowledgment MO-SMS-Ack is sent back to MSC/VLR.
6. (For post-paid) SMS-C creates a Call Data Record CDR for billing a post-paid subscriber. The tariff is based on the destination address smsto.
7. (For pre-paid). The billing system deducts money from the account.
8. (For pre-paid). The billing system sends back a message that money has been deducted from the account.
9. MSC/VLR sends back an acknowledgement MO-SMS-Ack to the mobile equipment. Then the content may be enabled and used.
10. (For post-paid). The MO-SMS is forwarded to the server of the content provider.
11. (For post-paid). A message is sent from the content provider to the billing system so that a CDR may be created for accounting purposes.
12. (For post-paid). The content provider sends back an acknowledgment MO-SMS to the switching centre SMS-C in order to terminate the SMS procedure and indicate that the accounting went well. (Steps 10 -12 are only for accounting purposes between network operators and content providers. The network operators and content providers may share the profits between them).

The invention describes a solution to the problem of paying for content that has minimal impact on the mobile equipment or mobile network infrastructure. It can reuse current payment mechanisms of today's mobile telecommunications network, such as GSM/3GPP. Furthermore, the solution opens a possibility for a business model where network operators and content providers can leverage each others strengths.

The invention is embodied in the described method and mobile equipment implementing the method as well as the corresponding content item. The scope of the invention is only limited by the claims below.

## Claims

1. A method for payment of content, comprising the steps of: incorporating or associating a payment directive in/with a content item; downloading the payment directive into a mobile equipment (1); when utilising the content item in the mobile equipment, reading the payment directive;
performing the payment directive involving a payment procedure including a payment from an account associated with the mobile equipment (1).

2. A method according to claim 1, wherein the payment procedure involves a contact over a mobile telecommunication network.

3. A method according to claim 2, wherein the contact involves messages, such as SMS and MMS, or circuit-switched calls, packet switched sessions, SS/USSD (Switched Session/Unstructured Supplementary Service Data) based procedures, or SIM based payment.

4. A method according to claim 3, wherein the acknowledgement of the payment is sent by means of a message (SMS).

5. A method according to claim 4, wherein the payment directive specifies dedicated message data which the telecommunication network will use when charging for the message services, such as SMS-C addresses, destination addresses, IP addresses, Access Point addresses.

6. A method according to claim 2, wherein the content item is temporarily enabled if the mobile equipment (1) is out of radio coverage.

7. A method according to claim 6, wherein the payment directive is performed as soon as mobile equipment (1) enters into radio coverage.

8. A method according to claim 1, wherein a cash card is inserted in the mobile equipment, the cash card containing a pre-paid amount, and the payment procedure involves deduction of a monetary amount from the cash card.

9. A method according to any one of the preceding claims, wherein the payment directive only is performed after a confirmation by a user.

10. A method according to any one of the preceding claims, wherein the payment directive comprises a restriction limit for use of the content item and a renewal directive, and when the restriction limit is reached, a further payment procedure is performed in accordance with the renewal directive, whereupon the content item is re-enabled.

11. A method according to any one of the preceding claims, wherein the payment directive comprises a free preview, such that the content item is permitted to be utilised once without invoking any payment procedure.

12. A method according to any one of the preceding claims, wherein the payment procedure further includes;
receiving an acknowledgement of the payment; and
only after receipt of said acknowledgement, enabling the content item.

13. Mobile equipment (1) adapted to implement a method for payment of content according to any one of claims 1 to 12.

14. A content item for downloading to mobile equipment, **characterised by** incorporating a payment directive involving a payment procedure including a payment from an account associated with the mobile equipment (1).

15. A content item according to claim 14, wherein the payment directive includes a specification of a contact over a mobile telecommunication network.

16. A content item according to claim 15, wherein the contact involves messages, such as SMS and MMS, or circuit-switched calls, packet switched sessions, SS/USSD (Switched Session/Unstructured Supplementary Service Data) based procedures, or SIM based payment.

17. A content item according to claim 16, wherein the payment directive specifies dedicated message data which the telecommunication network uses when charging for the message services, such as SMS-C addresses, destination addresses, IP addresses, Access Point addresses.

18. A content item according to claim 15, wherein the content item is adapted to be temporarily enabled if the mobile equipment (1) is out of radio coverage.

19. A content item according to claim 18, wherein the content item is adapted to command the payment directive to be performed as soon as mobile equipment (1) enters into radio coverage.

20. A content item according to claim 14, wherein the content item is adapted to command deduction of a monetary amount from a cash card inserted in the mobile equipment.

21. A content item according to any one of claims 14 to 20, wherein the content item is adapted to command the payment directive to be performed only after a confirmation by a user.

22. A content item according to any one of claims 14 to 21, wherein the payment directive comprises a restriction limit, restricting use of the content item, and a renewal directive, and wherein the content item is adapted to command a further payment procedure in accordance with the renewal directive when the restriction limit is reached, whereupon the content item is re-enabled.

23. A content item according to any one of claims 14 to 22, wherein the payment directive comprises a free preview, such that the content item is permitted to be utilised once without invoking any payment procedure.

24. A content item according to any one of claims 14 to 23, wherein the content item is adapted to be enabled after receiving an acknowledgement of the payment.

25. A content item according to any one of claims 14 to 24, wherein the payment directive is contained in a rights object container.
